# EUROPEAN PATENT SPECIFICATION

(11) **EP 0 518 334 B1**
(45) Date of publication and mention of the grant of the patent: **21.08.1996**
(21) Application number: 92109862.0
(22) Date of filing: 11.06.1992
(51) Int. Cl.: H04N 1/32

(54) **Facsimile apparatus**
Faksimilegerät
Dispositif de fac-similé

(30) Priority: 12.06.1991 JP 140397/91
(43) Date of publication of application: 16.12.1992
(73) Proprietor: SHARP KABUSHIKI KAISHA, Osaka 545 (JP)
(72) Inventor: Takehiro, Hidemi, Hiroshima-ken (JP); Nishino, Hiroto, Higashihiroshima-shi, Hiroshima-ken (JP)
(74) Representative: TER MEER - MÜLLER - STEINMEISTER & PARTNER

(56) References cited:
- WO-A-91/03115
- US-A- 4 321 626
- US-A- 4 419 697
- PATENT ABSTRACTS OF JAPAN vol. 6, no. 64 (E-103)23 April 1982 & JP-A-57 004 639
- PATENT ABSTRACTS OF JAPAN vol. 12, no. 115 (E-599)12 April 1988 & JP-A-62 243 452
- PATENT ABSTRACTS OF JAPAN vol. 14, no. 302 (E-946)28 June 1990 & JP-A-20 96 449

## Description

### BACKGROUND OF THE INVENTION

### 1. Field of the Invention

The present invention relates to a facsimile apparatus for transmitting and receiving control signals and image signals in accordance with facsimile communication procedures, and more particularly to a facsimile apparatus capable of outputting a name corresponding to the terminal number of a calling facsimile apparatus.

### 2. Description of the Related Art

The communication procedures that define the communication methods for control signals and image signals in facsimile communication include a procedure for receiving the terminal number from the calling party. The terminal number used in this procedure is the number used to recognize each individual facsimile apparatus as a terminal. Usually, the telephone number, a subscriber's number to an analog network or a digital network, is assigned as the terminal number.

Patent Abstracts of Japan vol. 6, no. 64 (E-103) 23 April 1982 & JP-A-57 004 639 discloses a communication device comprising means for storing combinations of a telephone number and name and for displaying an subscriber's name by receiving the telephone number of the calling subscriber when coincidence is obtained between the received telephone number and a stored telephone number.

US-A-4419697 discloses a facsimile apparatus which outputs information relevant to the communication every time when one communication has ended. This information may include the name of a transmitting or receiving facsimile apparatus.

In the CCITT (Consultative Committee of International Telegraph and Telephone) recommendation T.30, the reception of the terminal number is implemented by the regulations for CSI (Called Subscriber Identification) - a called terminal identification signal, TSI (Transmitting Subscriber Identification) - a transmitting terminal identification signal, and CIG (Calling Subscriber Identification) - a calling terminal identification signal.

The terminal number of the calling facsimile apparatus, received under these regulations, is usually displayed in numerals on a liquid crystal display (LCD). There are provided facsimile apparatus having a function of storing the communication time, the number of pages, the terminal number, etc. for each facsimile transaction and printing out all the stored information at a later time in the form of a so-called log report listing so that the entire communication log can be viewed at a glance.

Furthermore, in the case of facsimile apparatus having a memory function for storing received image signals, there is also provided a function of storing the communication time, the number of pages, the terminal number, etc. for each image signal reception and printing out the stored information on demand in the form of a so-called reception log report so that the total amount of the stored image signals can be confirmed.

As described above, conventional facsimile apparatus are provided with a function of storing and outputting such data items as the time, the number of pages, the terminal number, etc. for each facsimile communication in a manner that allows an easy view of the facsimile communication log.

However, with the above functions, the information on the calling facsimile itself can only be provided in the form of numerals representing the terminal number. This gives rise to the problem that the information on the calling party is insufficient when the details of communication log are to be grasped from the provided information.

### SUMMARY OF THE INVENTION

To overcome the above difficulty, it is an object of the invention to provide a facsimile apparatus that allows the details of facsimile communication log to be grasped in a simple manner.

To accomplish the above object, the invention is directed to the provision of a facsimile apparatus for transmitting and receiving control signals and image signals, in accordance with a facsimile communication procedure, to and from a remote facsimile apparatus connected over a telephone network, comprising the features of the independent claims.

According to the facsimile apparatus of the invention, the terminal number reading means reads the terminal number of the remote facsimile apparatus during facsimile communication, and the number searching means performs a search through the terminal name memory for a coincidence with the terminal number. When a coincidence is found. the number searching means sends out a registration signal, in response to which the terminal name corresponding to the terminal number is read out of the terminal name memory and the readout terminal name is output from the terminal name output means.

The display means displays the terminal name output from the terminal name output means.

Each time a facsimile transaction occurs and the registration signal is issued from the number searching means, the first information control means stores along with the communication information the terminal name given from the terminal name output means, and when an output request is made, outputs the stored contents at a time.

On the other hand, the second information control means stores the terminal name and communication information each time a facsimile transaction occurs. When an output request is made, the terminal numbers stored therein are transferred one at a time to the number searching means as each piece of the stored communication information is output, thereby having the terminal name output means output the terminal name corresponding to each piece of the communication information.

Furthermore, the image signals received during facsimile communication are stored in the image signal memory, and when the registration signal is issued from the number search means with respect to the facsimile communication for which the image signals have been stored, a first image information memory stores along with the communication information the terminal name given from the terminal name output means, and when an output request is issued, outputs the stored contents.

In an alternative embodiment, the image signals received during facsimile communication are stored in the image signal memory, and the communication information and terminal number for the facsimile communication entailing the storing of image signals into the image signal means are stored in a second image information memory. In this situation, when an output request is made, the stored terminal number is transferred to the number searching means, thereby having the terminal name output means output the terminal name corresponding to the communication information to be output.

In the facsimile apparatus embodying the invention, the terminal number reading means reads the terminal number of the remote facsimile apparatus during facsimile communication and the number searching means performs a search through the terminal name memory for a coincidence with the terminal number. When a coincidence is found, the terminal name is output from the terminal name output means so that the remote party of the facsimile communication can be identified by name. The invention therefore offers the advantage that it is easy to confirm the details of facsimile communication log.

### BRIEF DESCRIPTION OF THE DRAWINGS

Other and further objects, features, and advantages of the invention will be more explicit from the following detailed description taken with reference to the drawings wherein:
Fig.1 is a block diagram illustrating the electrical configuration of a facsimile apparatus according to a first embodiment of the invention;
Fig.2 is an explanatory diagram showing the contents of data stored in a terminal name memory;
Fig.3 is a flowchart explaining the transmit and receive operations of the facsimile apparatus;
Fig.4 is an explanatory diagram illustrating a communication procedure;
Fig.5 is a flowchart explaining an operation of the first embodiment of the invention;
Fig.6 is a flowchart explaining an operation of the first embodiment of the invention;
Fig.7 is a flowchart explaining an operation of the first embodiment of the invention;
Fig.8 is an explanatory diagram showing the printout format of a communication log report;
Fig.9 is an explanatory diagram showing the printout format of an image list;
Fig.10 is a block diagram illustrating the electrical configuration of a facsimile apparatus according to a second embodiment of the invention;
Fig.11 is a flowchart explaining an operation of the second embodiment of the invention;
Fig.12 is a flowchart explaining an operation of the second embodiment of the invention; and
Fig.13 is an explanatory diagram showing a polling communication procedure.

### DETAILED DESCRIPTION OF THE PREFERRED EMBODIMENTS

Now referring to the drawing, preferred embodiments of the invention are described below.

One embodiment of the invention will now be described with reference to the accompanying drawings.

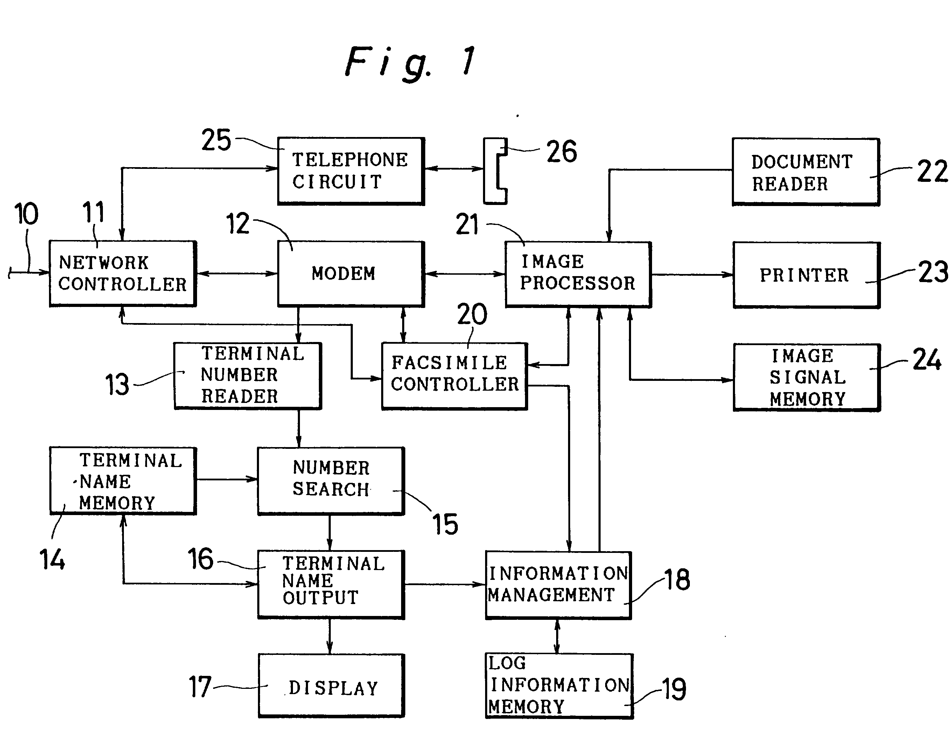

Fig.1 is a block diagram illustrating the electrical configuration of a facsimile apparatus according to a first embodiment of the invention.

As shown in Fig.1, a facsimile control section 20 for transmitting or receiving control signals in accordance with a communication procedure specified in the CCITT recommendation T.30 and for controlling the transmission and reception of image signals, a modulator/demodulator circuit (modem) 12 for modulating or demodulating facsimile control signals and image signals, and a telephone circuit 25 for performing signal processing for voice communication are respectively connected bidirectionally to a network control circuit 11 to which a telephone line 10 is connected. The network control circuit 11 has the functions of holding or releasing the line, making an outgoing call, detecting an incoming call, and controlling the connections with the circuits 20, 12, and 25.

The modulator/demodulator circuit 12 is bidirectionally connected to the facsimile control section 20 and also to an image processing section 21 which encodes image signals introduced therein or decodes encoded image signals. The image processing section 21 is also connected bidirectionally to the facsimile control section 20.

Image signals output from a document reading section 22 are supplied to the image processing section 21, and image signals output from the image processing section 21 are directed to a printing section 23 for printing out documents. There is also provided an image signal memory 24 which is bidirectionally connected to the image processing section 21.

An output of the modulator/demodulator circuit 12 is supplied to a terminal number reading section 13 for reading the terminal number of the remote facsimile apparatus which is the other party of the facsimile communication. An output of the terminal number reading section 13 is delivered to a number searching section 15. There is also provided a terminal name memory 14 which stores a plurality of facsimile terminal numbers and the terminal names corresponding to these terminal numbers and whose outputs are connected to the number searching section 15 and a terminal name output section 16.

A registration signal, which is output from the number searching section 15, is fed to the terminal name output section 16 whose outputs are connected to a display section 17 and an information control section 18.

An output from the facsimile control section 20 is directed to the information control section 18, while an output from the information control section 18 is routed to the image processing section 21. Further, the information control section 18 is bidirectionally connected to a log information memory 19. A handset 26 is bidirectionally connected to the telephone circuit 25.

In the above configuration, the information control section 18 and the log information memory 19 together constitute a first communication information control means as well as a first image information control means .

The detailed configuration of the terminal name memory 14 will now be described.

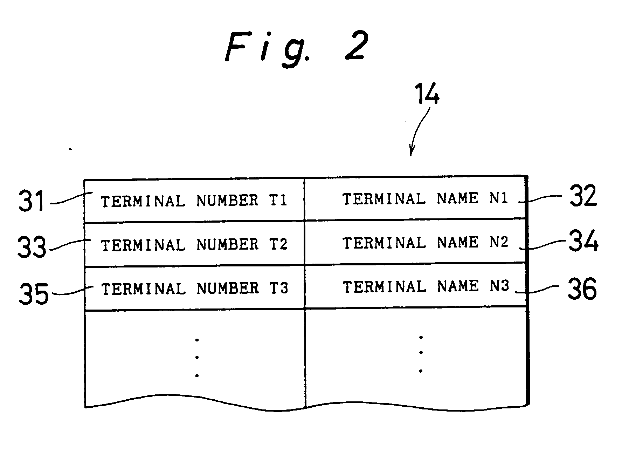

The terminal name memory 14 is constructed from a memory (random access memory), the internal configuration of the memory is shown in Fig.2.

In the memory, a memory area 31 is allocated for a terminal number T1, in correspondence with which is allocated a memory area 32 for a terminal name N1. Likewise, memory areas 33, 34, 35, 36 are allocated for a terminal number T2, a terminal name N2, a terminal number T3, and a terminal name N3 in this order. The memory areas 31 - 36, ..., are each capable of storing a maximum of 70 characters.

In each pair of the memory areas 31 - 36, ..., the telephone number of a facsimile apparatus installed, for example, at a business customer is stored as the terminal number alongside the customer's name as the terminal name by entering the number and name from an input section not shown.

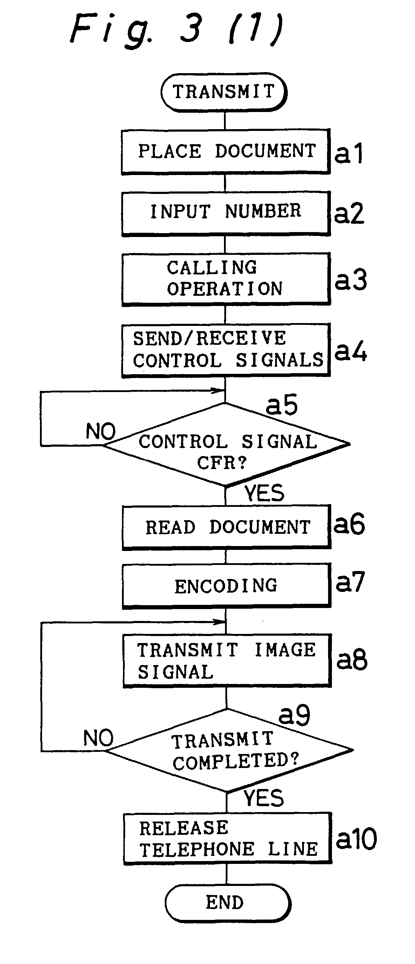

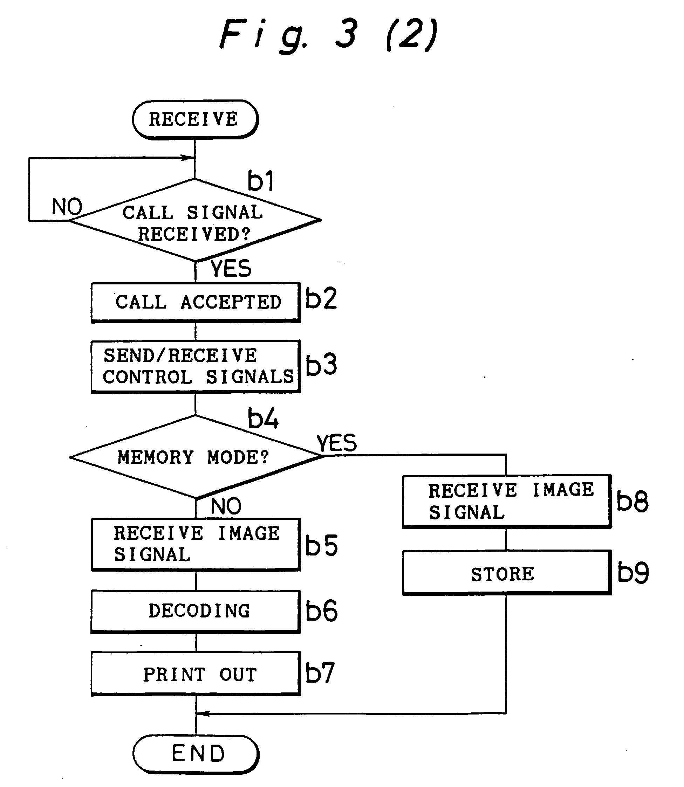

The first embodiment of the invention having the above configuration will now be described. Fig.3 is a flowchart explaining the transmit and receive operations of the facsimile apparatus of the first embodiment.

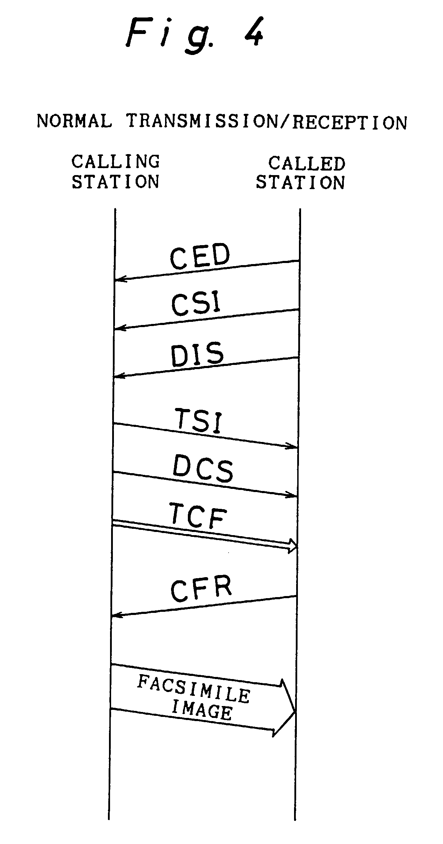

Referring to Fig.3(1), to initiate a transmit operation, first a document is placed into the reading section 22 in step a1, and then in step a2, a number is entered through the input section for dialing operation without lifting the handset 26. In step a3, a calling operation is performed by the network control circuit 11; in response to the calling operation, control signals CED, CSI, and DIS, shown in Fig.4, are transmitted from the called facsimile apparatus.

These control signals are directed through the network control circuit 11 and the modulator/demodulator circuit 12 and on to the facsimile control section 20. In response to these control signals, the facsimile control section 20 sends out control signals TSI, DCS, and TCS through the modulator/demodulator circuit 12 and the network control circuit 11 (step a4), and in step a5, waits for the arrival of a control signal CFR.

When the control signal CFR is received, the reading section 22 reads the document in step a6 and outputs an image signal which is supplied to the image processing section 21 for encoding (step a7). The encoded image signal is then fed through the modulator/demodulator circuit 12 and the network control circuit 11 and transmitted to the called facsimile apparatus (step a8).

When the transmission of all documents in the form of encoded image signals has been completed (step a9), the facsimile control section 20 controls the network control circuit 11 to release the telephone line 10 in step a10, thereby terminating the entire transmit operation.

Referring next to Fig.3(2), when a calling signal arrives through the telephone line 10, the calling signal is detected by the network control circuit 11 in step b1, and the facsimile control section 20 is notified of the arrival of the call. The facsimile control section 20 thus notified controls the network control circuit 11 to close the telephone line 11 in step b2 to initiate a procedure for facsimile reception.

Next, in step b3, the control signals CED, CSI, and DIS are sent out through the modulator/demodulator circuit 12 and the network control circuit 11 and transmitted on to the telephone line 10, and after reception of the control signals TSI, DCS, and TCS, the control signal CFR is transmitted to the calling terminal. In step b4, it is determined whether the memory mode is set or not.

When an image signal is received with the apparatus not set in the memory mode (step b5), the image signal is directed to the image processing section 21 for decoding (step b6). In step b7, the decoded image signal is fed to the printing section 23 to print out the received document.

On the other hand, when the instruction is already given through the input section (not shown) to store incoming image signals without printing them out, that is, when the memory mode is set, the incoming image signal, received in step b8, is transferred directly to the image signal memory 24 where the image signal is stored without being decoded (step b9).

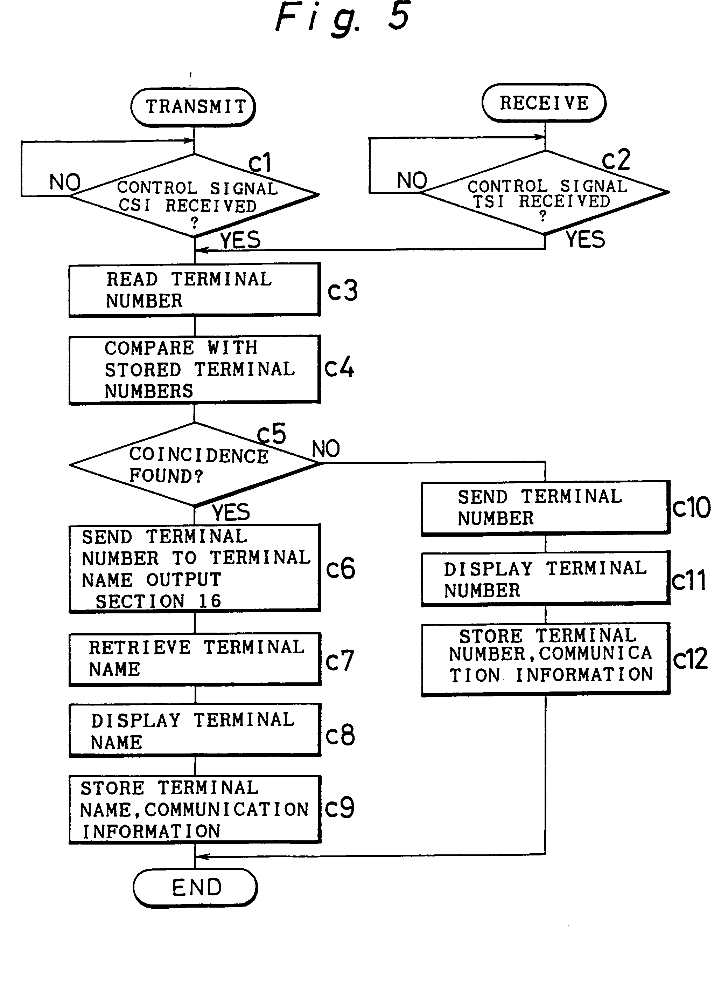

Fig.5 is a flowchart explaining the storing operation of the facsimile apparatus. In the above described operations for the transmission and reception of image signals, the terminal number of the remote facsimile apparatus is transmitted by way of the control signal CSI in the case of facsimile transmission thereto and by way of the control signal TSI in the case of facsimile reception therefrom. Referring to Fig.5, the terminal number reading section 13 reads the subscriber's terminal number from the control signal CSI in the case of facsimile transmission (step c1) and from the control signal TSI in the case of facsimile reception (step c2), and delivers the thus read terminal number to the number searching section 15 (step c3).

In step c4, the number searching section 15 sequentially reads out the terminal numbers prestored in the terminal name memory 14 and compares the readout terminal numbers with the terminal number given from the terminal number reading section 13. When, in step c5, a coincidence is found with one of the terminal numbers, a registration signal and the coinciding terminal number are supplied to the terminal name output section 16 in step c6. Upon receiving these data, the terminal name output section 16 retrieves the terminal name corresponding to the terminal number from the terminal name memory 14 in step c7 and delivers the retrieved terminal name to the information control section 18 and the display section 17.

In step c8, the display section 17 displays the terminal name delivered from the terminal name output section 16, while in step c9 the information control section 18 transfers the terminal name, along with communication information such as the date, time, and number of pages for the communication relating to the terminal number, to the log information memory 19 for storage therein.

After the searching by the number searching section 15 for a matching terminal number in step c4, when no coincidence has been found in step c5, the terminal number given from the terminal number reading section 13 is delivered to the display section 17 and the information control section 18. As a result, the terminal number is displayed on the display section 17 in step c11 while the terminal number is stored in the log information memory 19 along with the communication information.

That is, during each facsimile communication, the remote terminal name (when no coincidence is found, the subscriber's terminal number) is displayed on the display section 17, and as each transaction is performed, the terminal name and communication information are stored in the log information memory 19 (when the terminal name corresponding to the terminal number is not found in the terminal name memory 14, the terminal number and the communication information are stored).

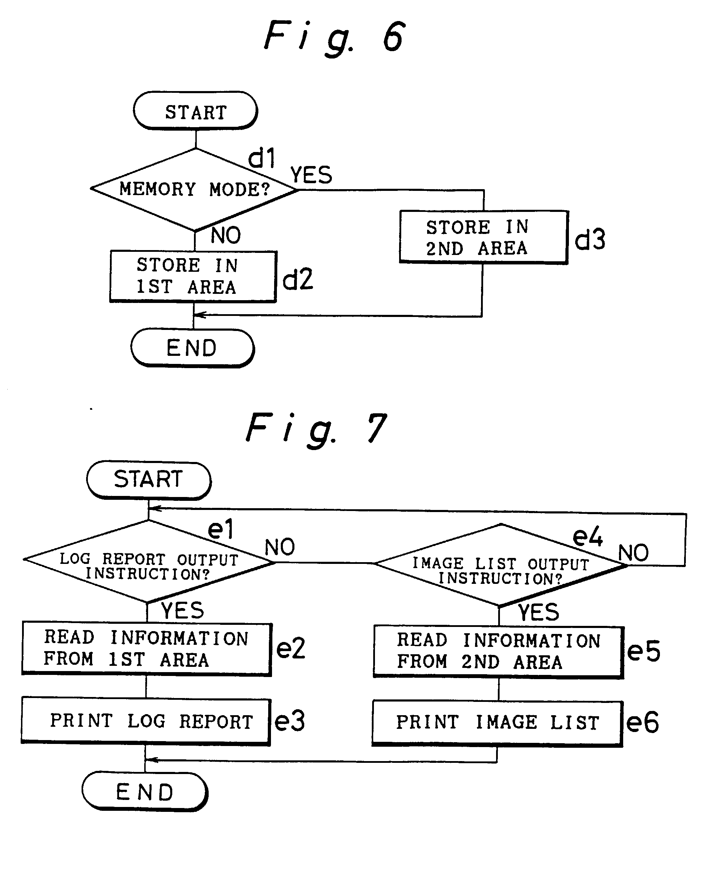

Fig.6 is a flowchart explaining the above operation in more detail. Referring to the operation of the log information memory 19, when the instruction is already given to store incoming image signals in the image signal memory 24 (step d1), the terminal name or terminal number and the communication information relating to the image signal received and stored in the image signal memory 24 are stored in a second memory area within the memory (step d3). On the other hand, when image signals are not to be stored in the image signal memory 24 (step d1), the terminal name or terminal number and the communication information relating to the received image signal is stored in a first memory area within the memory (step d2), which is a different memory area than the second memory area.

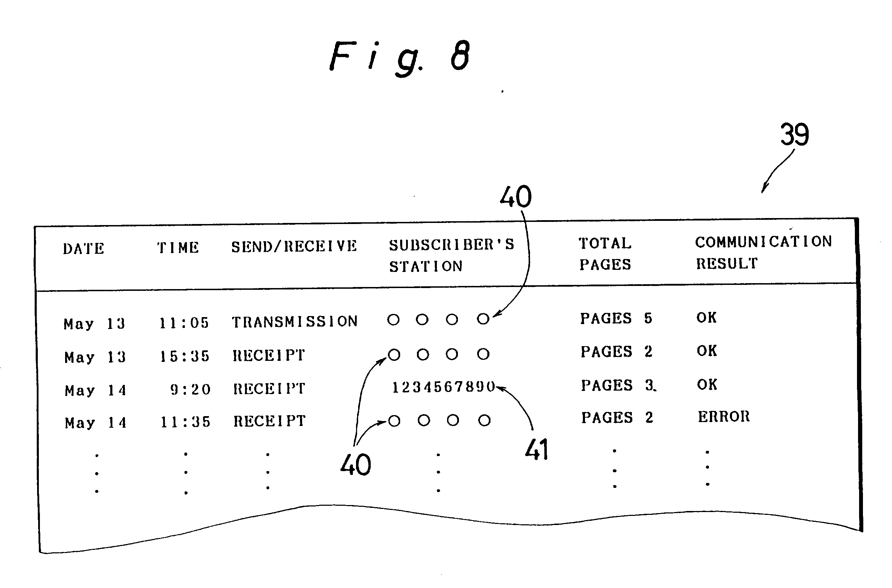

Fig.7 is a flowchart explaining a report output operation. When an instruction is given in step e1 to output a communication log report, the information control section 18 reads out the information stored in the first area of the log information memory 19 in step e2, and transfers the readout information to the image processing section in step e3, thereby having the printing section 23 print out a communication log report 39 as shown in Fig.8. On the communication log report 39, the names such as company names (designated by reference numeral 40) corresponding to the remote terminals are printed in the column of the subscriber's station. The entry of the terminal number (designated by reference numeral 41) instead of the name indicates that the terminal name corresponding to the subscriber's facsimile terminal number is not stored in the terminal name memory 14.

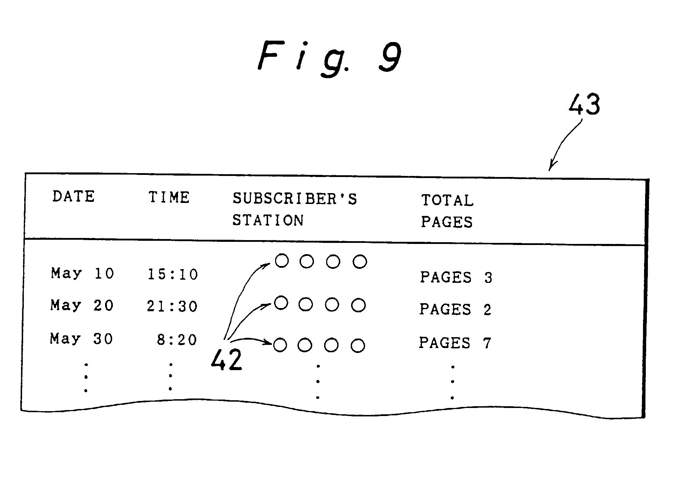

When an instruction is given in step e4 to output an image list, the information control section 18 reads out the information stored in the second area of the log information memory 19 in step e5. and transfers the readout information to the image processing section 21 in step e6, thereby having the printing section 23 print out an image list 43. Fig.9 shows the format of the image list 43 on which the names such as company names (designated by reference numeral 42) are printed in the column of the subscriber's station.

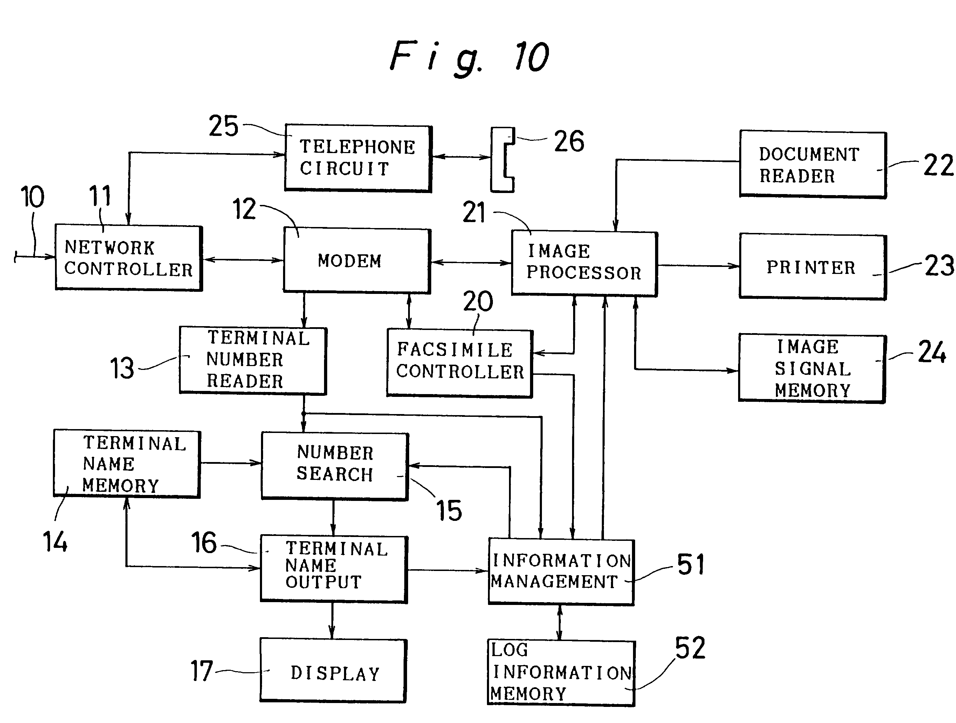

Fig.10 is a block diagram illustrating the electrical configuration of a facsimile apparatus according to a second embodiment of the invention.

Since this embodiment is essentially the same as the foregoing first embodiment, the same reference numerals are used to indicate the same parts and the structural and operational descriptions thereof are omitted herein.

The description below deals only with differences in configuration from the first embodiment.

While, in the first embodiment, the output of the terminal number reading section 13 is directed only to the number searching section 15, in the second embodiment the output is directed to the information control section 51 as well as to the number searching section 15. Furthermore, in the first embodiment, the output of the information control section 18 is directed only to the image processing section 21, but the output of the information control section 51 of the second embodiment is directed to the number searching section 15 as well as to the image processing section 21.

The above are the only differences in configuration from the first embodiment. In the second embodiment, the information control section 51 and the log information memory 52 together constitute a second communication information control means as well as a second image information control means.

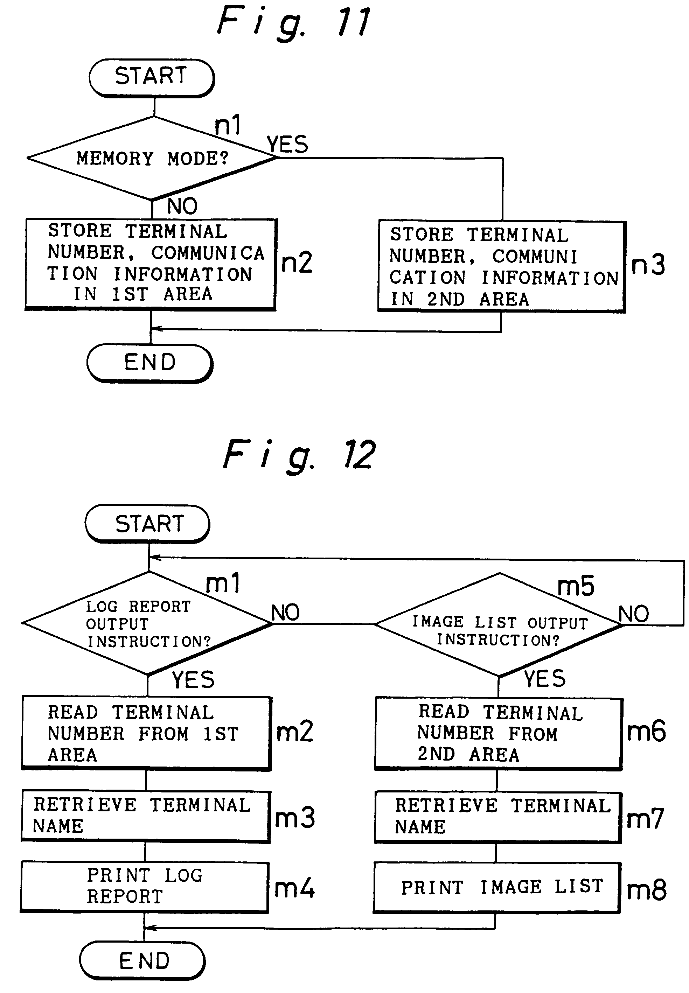

Referring to Fig.11, the operation of the second embodiment will be described below.

In the first embodiment, as one facsimile transaction occurs, the information control section 18 works in such a manner that when a terminal name is output from the terminal name output section 16, the terminal name is stored in the first area of the log information memory 19 along with communication information and that when no terminal name is output from the terminal name output section 16, the terminal number is stored in the first area of the log information memory 19 along with communication information. On the other hand, in the second embodiment, when the facsimile apparatus is not set in the memory mode (step n1), the information control section 51 works in such a manner that the terminal number output from the terminal number reading section 13 and the communication information output from the facsimile control section 20 are stored in a first area of the log information memory 52 (step n2) each time a facsimile transaction occurs.

When the apparatus is so set as to store incoming image signals in the image signal memory 24 (step n1), the terminal number output from the terminal number reading section 13 and the communication information output from the facsimile control section 20 are stored in a second area of the log information memory 52 (step n3) each time a facsimile transaction occurs that involves the image storing operation.

Fig.12 is a flowchart explaining a report output operation. When an instruction is given in step m1 to output a communication log report, the information control section 51 reads out the terminal number stored in the first area of the log information memory 52 in step m2, and delivers the readout terminal number to the number searching section 15. In step m3, the number searching section 15 supplied with the terminal number and the terminal name output section 16 to which the output of the number searching section 15 is directed perform the same operations as previously described, so that the terminal name output from the terminal name output section 16 is delivered to the information control section 51.

In step m4, the information control section 51 transfers the terminal name output from the terminal name output section 16 to the image processing section 21 along with the communication information, thereby printing out a communication log report. The printout format of the communication log report is the same as that shown in Fig.8.

When an instruction is given in step m5 to output an image list, a similar operation to that described above is performed, and the information control section 51 transfers the terminal name output from the terminal name output to the image processing section 21 along with the communication information, thereby printing out an image list as shown in Fig.9 (steps m6 to m8).

As described above, in either of the above embodiments, the terminal name of the called facsimile apparatus is displayed on the display section 17, thus allowing the calling operator to confirm that the connection is made with the correct party.

Furthermore, since the terminal names are printed on the image list, it is easy to recognize the documents that need urgent printing among the documents stored in the image signal memory 24.

It is also possible to reduce the storage capacity of the log information memory 52 when the second communication information control means and the second image information control means are used.

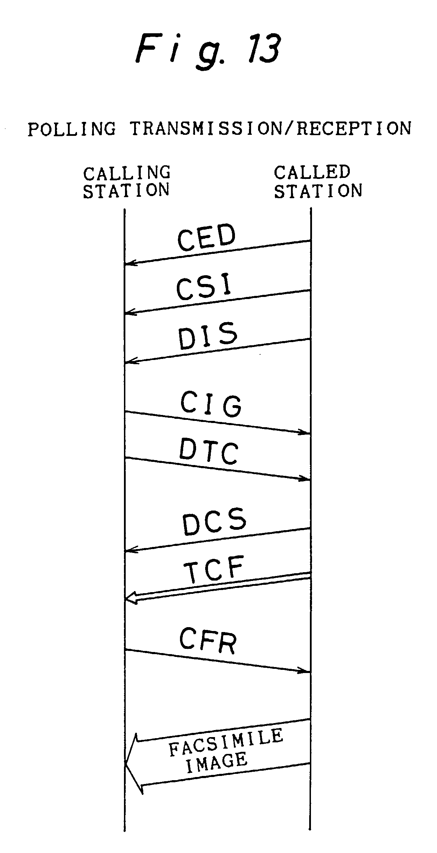

It will be appreciated that the invention is not limited to the above embodiments but is also applicable to facsimile apparatus for performing facsimile communication by polling, a communication procedure for which is shown in Fig.13, since in such operation also, the terminal number of the remote facsimile apparatus can be received by way of the control signals CSI and CIG.

The invention may be embodied in other specific forms without departing from the essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A communication apparatus for transmitting and receiving signals, in accordance with a communication procedure, to and from a remote communication apparatus connected over a telephone network (10), comprising:
a terminal name memory (14) for storing a plurality of terminal numbers alongside terminal names corresponding to the respective terminal numbers;
a terminal number reading means (13) for reading the terminal number of a remote communication apparatus during communication;
a number searching means (15) for searching for a coincidence between the terminal number read by the terminal number reading means (13) and any one of the terminal numbers stored in the terminal name memory (14) and for sending out a registration signal when a coincidence is found; and
a terminal name output means (16) for reading the terminal name memory (14) in response to the registration signal issued from the number searching means (15) and thereby outputting the terminal name corresponding to the terminal number read by the terminal number reading means (13);
**characterized in that**
said communication apparatus is a facsimile apparatus further comprising communication control means (18, 19) for storing along with communication information the terminal name given from the terminal name output means (16) each time a facsimile transaction occurs and the registration signal is issued from the number searching means (15) and for outputting at a time the stored terminal names and communication information in a list form when an output request is made.

2. A communication apparatus for transmitting and receiving signals, in accordance with a communication procedure, to and from a remote communication apparatus connected over a telephone network (10), comprising:
a terminal name memory (14) for storing a plurality of terminal numbers alongside terminal names corresponding to the respective terminal numbers;
a terminal number reading means (13) for reading the terminal number of a remote communication apparatus during communication;
a number searching means (15) for searching for a coincidence between the terminal number read by the terminal number reading means (13) and any one of the terminal numbers stored in the terminal name memory (14) and for sending out a registration signal when a coincidence is found; and
a terminal name output means (16) for reading the terminal name memory (14) in response to the registration signal issued from the number searching means (15) and thereby outputting the terminal name corresponding to the terminal number read by the terminal number reading means (13);
**characterized in that**
said communication apparatus is a facsimile apparatus further comprising communication control means (51, 52) for storing along with communication information the terminal number from the remote facsimile apparatus each time a facsimile transaction occurs and for delivering the stored terminal number to the number searching means (15) and thereby having the terminal name output means (16) output the terminal name corresponding to the communication information when an output request is made for outputting at a time the terminal names and stored communication information in a list form.

3. The facsimile apparatus as set forth in any of the preceding claims, further comprising a display means (17) for displaying the terminal name output from the terminal name output means (16).

4. The facsimile apparatus as set forth in any of the preceding claims, further comprising an image signal memory (24) for storing image signals received during facsimile communication.

## Patentansprüche

1. Nachrichtenübertragungsgerät zum Senden und Empfangen von Signalen gemäß einem Nachrichtenübertragungsverfahren zu und von einem entfernten Nachrichtenübertragungsgerät, das über ein Telefonnetz (10) verbunden ist, mit:
einem Anschluß-Namensspeicher (14) zum Speichern einer Mehrzahl von Anschlußnummern neben Anschlußnamen, die den jeweiligen Anschlußnummern entsprechen;
einem Anschlußnummernleser (13) zum Lesen der Anschlußnummer eines entfernten Nachrichtenübertragungsgeräts während der Nachrichtenübertragung;
einem Nummernsucher (15) zum Suchen einer Übereinstimmung zwischen der durch den Anschlußnummernleser (13) gelesenen Anschlußnummer und irgendeiner der im Anschluß-Namensspeicher (14) gespeicherten Anschlußnummern und zum Aussenden eines Anzeigesignals, wenn eine Übereinstimmung gefunden wurde; und
einem Anschlußname-Ausgabemittel (16) zum Lesen des Anschluß-Namensspeichers (14) als Reaktion auf das vom Nummernsucher (15) ausgegebene Anzeigesignal, und zum dadurch Ausgeben des Anschlußnamens, der der vom Anschlußnummernleser (13) gelesenen Anschlußnummer entspricht; **dadurch gekennzeichnet, daß** das Nachrichtenübertragungsgerät ein Facsimilegerät ist, das ferner eine Nachrichtenübertragungssteuerung (18, 19) enthält zum Speichern des vom Anschlußname-Ausgabemittel (16) gelieferten Anschlußnamens zusammen mit Nachrichtenübertragungsinformation, jedesmal wenn ein Facsimilevorgang stattfindet und das Anzeigesignal vom Nummernsucher (15) ausgegeben wird, und zum gleichzeitigen Ausgeben der gespeicherten Anschlußnamen und Nachrichtenübertragungsinformation in Listenform, wenn eine Ausgabeanforderung erfolgt.

2. Nachrichtenübertragungsgerät zum Senden und Empfangen von Signalen gemäß einem Nachrichtenübertragungsverfahren zu und von einem entfernten Nachrichtenübertragungsgerät, das über ein Telefonnetz (10) verbunden ist, mit:
einem Anschluß-Namensspeicher (14) zum Speichern einer Mehrzahl von Anschlußnummern neben Anschlußnamen, die den jeweiligen Anschlußnummern entsprechen;
einem Anschlußnummernleser (13) zum Lesen der Anschlußnummer eines entfernten Nachrichtenübertragungsgeräts während der Nachrichtenübertragung;
einem Nummernsucher (15) zum Suchen einer Übereinstimmung zwischen der durch den Anschlußnummernleser (13) gelesenen Anschlußnummer und irgendeiner der im Anschluß-Namensspeicher (14) gespeicherten Anschlußnummern und zum Aussenden eines Anzeigesignals, wenn eine Übereinstimmung gefunden wurde; und
einem Anschlußname-Ausgabemittel (16) zum Lesen des Anschluß-Namensspeichers (14) als Reaktion auf das vom Nummernsucher (15) ausgegebene Anzeigesignal, und zum dadurch Ausgeben des Anschlußnamens, der der vom Anschlußnummernleser (13) gelesenen Anschlußnummer entspricht; **dadurch gekennzeichnet, daß** das Nachrichtenübertragungsgerät ein Facsimilegerät ist, das ferner eine Nachrichtenübertragungssteuerung (51, 52) enthält zum Speichern der Anschlußnummer des entfernten Facsimilegeräts zusammen mit Nachrichtenübertragungsinformation, jedesmal wenn ein Facsimilevorgang stattfindet und zum Liefern der gespeicherten Anschlußnummer an den Nummernsucher (15) und zum dadurch Veranlassen, daß das Anschlußname-Ausgabemittel (16) den der Nachrichtenübertragungsinformation entsprechenden Anschlußnamen ausgibt, wenn eine Ausgabeanforderung zum gleichzeitigen Ausgeben der Anschlußnamen und gespeicherten Nachrichtenübertragungsinformation in Listenform erfolgt.

3. Facsimilegerät nach einem der vorangehenden Ansprüche, das ferner eine Anzeige (17) zum Anzeigen des vom Anschlußname-Ausgabemittel (16) ausgegebenen Anschlußnamens enthält.

4. Facsimilegerät nach einem der vorangehenden Ansprüche, das ferner einen Bildsignalspeicher (24) zum Speichern von während der Facsimile-Nachrichtenübertragung empfangenen Bildsignalen enthält.

## Revendications

1. Appareil de télécommunications destiné à émettre et recevoir des signaux conformément à une procédure de transmission, vers et depuis un appareil de télécommunications placé à distance, connecté sur un réseau téléphonique (10), comprenant :
une mémoire de noms de terminal (14) destinée à enregistrer une série de numéros de terminal conjointement avec des noms de terminal correspondant aux numéros de terminal respectifs ;
des moyens de lecture de numéros de terminal (13) destinés à lire le numéro de terminal d'un appareil de télécommunications placé à distance, au cours de la transmission ;
des moyens de recherche de numéros (15) destinés à rechercher une coïncidence entre le numéro de terminal lu par les moyens de lecture de numéros de terminal (13) et l'un quelconque des numéros de terminal enregistrés dans la mémoire de noms de terminal (14), et à émettre un signal de superposition quand une coïncidence est trouvée ; et
des moyens de sortie de noms de terminal (16) destinés à lire la mémoire de noms de terminal (14), en réponse au signal de superposition issu des moyens de recherche de numéros (15), et à fournir ainsi le nom de terminal correspondant au numéro de terminal lu par les moyens de lecture de numéros de terminal (13) ;
caractérisé en ce que
ledit appareil de télécommunications est un appareil de télécopie comprenant, en outre, des moyens de commande de transmission (18, 19) pour mémoriser, avec des informations relatives à la transmission, le nom de terminal donné par les moyens de sortie de noms de terminal (16), chaque fois qu'une opération de télécopie a lieu et que le signal de superposition est délivré par les moyens de recherche de numéros (15), et pour fournir, en une fois, les noms de terminal mémorisés et les informations mémorisées relatives à la transmission, sous forme d'une liste, quand une demande de sortie est faite.

2. Appareil de télécommunications destiné à émettre et recevoir des signaux conformément à une procédure de transmission, vers et depuis un appareil de télécommunications placé à distance, connecté sur un réseau téléphonique (10), comprenant :
une mémoire de noms de terminal (14) destinée à enregistrer une série de numéros de terminal conjointement avec des noms de terminal correspondant aux numéros de terminal respectifs ;
des moyens de lecture de numéros de terminal (13) destinés à lire le numéro de terminal d'un appareil de télécommunications placé à distance, au cours de la transmission ;
des moyens de recherche de numéros (15) destinés à rechercher une coïncidence entre le numéro de terminal lu par les moyens de lecture de numéros de terminal (13) et l'un quelconque des numéros de terminal enregistrés dans la mémoire de noms de terminal (14) et à émettre un signal de superposition quand une coïncidence est trouvée ; et
des moyens de sortie de noms de terminal (16) destinés à lire la mémoire de noms de terminal (14) en réponse au signal de superposition issu des moyens de recherche de numéros (15) et à fournir ainsi le nom de terminal correspondant au numéro de terminal lu par les moyens de lecture de numéros de terminal (13) ;
caractérisé en ce que
ledit appareil de télécommunications est un appareil de télécopie comprenant, en outre, des moyens de commande de transmission (51, 52) pour mémoriser, avec des informations relatives à la transmission, le numéro de terminal issu de l'appareil de télécopie placé à distance, chaque fois qu'une opération de télécopie a lieu, et pour fournir le numéro de terminal mémorisé aux moyens de recherche de numéros (15) et faire ainsi délivrer, par les moyens de sortie de noms de terminal (16), le nom de terminal correspondant aux informations relatives à la transmission, quand une demande de sortie est faite, pour que soient délivrés, en une fois, sous forme d'une liste, les noms de terminal et les informations mémorisées relatives à la transmission.

3. Appareil de télécopie tel que défini dans l'une quelconque des revendications précédentes, comprenant en outre des moyens d'affichage (17) destinés à afficher le nom de terminal délivré par les moyens de sortie de noms de terminal (16).

4. Appareil de télécopie tel que défini dans l'une quelconque des revendications précédentes, comprenant en outre une mémoire de signaux d'image (24) destinée à mémoriser des signaux d'image reçus au cours de la transmission d'une télécopie.
